# EUROPÄISCHE PATENTANMELDUNG

(11) **EP 0 778 430 A1**
(43) Veröffentlichungstag der Anmeldung: **11.06.1997**
(21) Anmeldenummer: 96118713.5
(22) Anmeldetag: 21.11.1996
(51) Int. Cl.: F16J 15/06, B29C 51/08, B29C 67/00

(54) **Verfahren und Vorrichtung zur Herstellung einer Dichtung zum Abdichten von Dichtflächen, vorzugsweise zusammenpassenden Dichtflächen**

(30) Priorität: 05.12.1995 DE 19545373
(71) Anmelder: W.L. GORE & ASSOCIATES GmbH, 85640 Putzbrunn (DE)
(72) Erfinder: Werner, Michael, 85635 Höhenkirchen (DE)
(74) Vertreter: Klunker . Schmitt-Nilson . Hirsch

(57) **Zusammenfassung**

Bei einem neuen Verfahren zur Herstellung einer Dichtung unter Verwendung eines verdichtbaren Dichtungsmaterials, insbesondere eines Fluorpolymers, zum Abdichten von Dichtflächen, insbesondere zum Herstellen einer Ringdichtung zum Abdichten von Flanschverbindungen für Rohre, ist vorgesehen, daß zur Bildung eines Zentrierbundes bzw. zur Bildung von mehreren umfangsmäßig voneinander beabstandeten Zentrierbundabschnitten ein vorgegebener Außen- und/oder Innenrandbereich bzw. mehrere vorgegebene, umfangsmäßig voneinander beabstandete Außen- und/oder Innenrandbereiche des Dichtungsmaterials unter einem vorwählbaren Winkel, z.B. in einer Richtung im wesentlichen rechtwinklig zur Dichtungsebene umgebördelt und sodann der umgebördelte Außen- und/oder Innenrandbereich bzw. die umgebördelten Außen- und/oder Innenrandbereiche verdichtet wird bzw. werden.

Mit Hilfe dieses Verfahrens läßt sich beispielweise eine Ringdichtung aus einem multidirektional expandierten Polytetrafluorethylen herstellen, das eine Dichte von 0,7 g/cm³ aufweist. Im Zuge der Verdichtung des umgebördelten Zentrierbundes dieser Ringdichtung enthält dieser eine Dichte von 1,9 g/cm³, gegebenenfalls aber auch eine dreifache Dichte, d.h. eine Dichte von ca. 2,1 g/cm³.

Eine Vorrichtung zur Durchführung des Verfahrens zur Herstellung einer Dichtung, insbesondere eine Ringdichtung zum Abdichten von Flanschverbindungen für Rohre, weist im wesentlichen auf:
a) eine Einrichtung (21) zum Tragen und Zentrieren der zunächst in einem Vorfertigungszustand, insbesondere in Form einer Lochscheibe vorliegenden Dichtung (1);
b) eine Einrichtung (23) zum Umbördeln des vorgegebenen Außen- und/oder inneren Randbereichs bzw. mehrerer vorgegebener, umfangsmäßig voneinander beabstandeter Außen- und/oder Innenrandbereiche der Dichtung (1) und zum Verdichten des (der) entsprechenden umgebördelten Außen- und/oder Innenrandbereichs (-bereiche) unter Anwendung von mechanischem Druck und gegebenenfalls unter zusätzlicher und gleichzeitiger Anwendung von Wärme; und
c) eine Einrichtung zum Erzeugen von Relativbewegungen zwischen der Einrichtung (21) und der Einrichtung (23) für den Ablauf der aufeinanderfolgenden Vorgänge des Umbördelns und des Verdichtens zur Bildung des Zentrierbundes (3) bzw. von mehreren, umfangsmäßig voneinander beabstandeten Zentrierbundabschnitten der resultierenden Dichtung (1).

## Beschreibung

Die Erfindung betrifft ein Verfahren zur Herstellung einer Dichtung unter Verwendung eines verdichtbaren Dichtungsmaterials, insbesondere eines Fluorpolymers, zum Abdichten von Dichtflächen, vorzugsweise zusammenpassenden Dichtflächen, insbesondere zum Herstellen einer Ringdichtung zum Abdichten von Flanschverbindungen für Rohre, wobei die Dichtung am Außen- und/oder Innenumfang mit einem Zentrierbund bzw. mit mehreren umfangsmäßig voneinander beabstandeten Zentrierbundabschnitten versehen wird.

Ferner bezieht sich die Erfindung auf eine Vorrichtung zur Herstellung einer Dichtung unter Verwendung eines verdichtbaren Dichtungsmaterials, insbesondere eines Fluorpolymers, zum Abdichten von Dichtflächen, vorzugsweise zusammenpassenden Dichtflächen, insbesondere auf eine Vorrichtung zum Herstellen einer Ringdichtung zum Abdichten von Flanschverbindungen für Rohre, wobei die Dichtung am Außen- und/oder Innenumfang mit einem Zentrierbund bzw. mit mehreren umfangsmäßig voneinander beabstandeten Zentrierbundabschnitten versehen wird, und vorzugsweise auf eine Vorrichtung zur Durchführung des Verfahrens nach der Erfindung.

### Der Stand der Technik

Dichtungen zum Abdichten von Dichtflächen, insbesondere Ringdichtungen zum Abdichten von Flanschverbindungen an zwei sich aneinander anschließenden Rohren, z.B. Gasrohren oder dergleichen, sind bereits bekannt.

Der relevante Stand der Technik wird beispielsweise anhand der Fig. 9 erläutert. Hierin ist im wesentlichen eine Flanschverbindung 70 für Rohre dargestellt, wobei zwei stirnseitig aufeinander zustoßende Rohrelemente, nämlich ein erstes Rohrelement 71 und ein zweites Rohrelement 72 gegenseitig abzudichten sind. Das erste Rohrelement 71 weist einen entsprechenden ersten Rohrflansch 75 mit einem ersten Außenumfang 77 und das zweite Rohrelement 72 weist einen entsprechenden zweiten Rohrflansch 76 mit einem zweiten Außenumfang 78 auf. Im Bereich zwischen den stirnseitig einander zugewendeten Rohrflanschen 75 und 76 befindet sich eine Ringdichtung 84, beispielsweise aus einem Faserwerkstoff. Der erste Rohrflansch 75 und der zweite Rohrflansch 76 der Flanschverbindung 70 werden mittels einer Anordnung in einer gegeneinandergepreßten Position gehalten, wobei diese Anordnung im wesentlichen aus einer ersten Druckscheibe 79, welche dem ersten Rohrflansch 75 zugeordnet ist, sowie aus einer zweiten Druckscheibe 80 besteht, die entsprechend dem zweiten Rohrflansch 76 zugeordnet ist. Die erste Druckscheibe 79 und zweite Druckscheibe 80 sind miteinander mittels eines Spannbolzens 81 verbunden, der durch entsprechende Bohrungen der ersten Druckscheibe 79 und der zweiten Druckscheibe 80 hindurchgeführt und mittels einer der ersten Druckscheibe 79 zugeordneten ersten Mutter 82 sowie einer der zweiten Druckscheibe 80 zugeordneten, zweiten Mutter 83 fixiert ist. Wesentlich für eine ordnungsgemäße Funktion der Ringdichtung 84 im Bereich der Flanschverbindung 70 ist eine Zentrierung der Ringdichtung 84, wobei gemäß dem anhand der Fig. 9 erläuterten Stand der Technik eine derartige Zentrierung mittels des Spannbolzens 81 erfolgt. Um dies zu bewerkstelligen, ist die Ringdichtung 84 am Außenumfang mit einem Zentrierrand 85 versehen, der gegen den Spannbolzen 81 zum Anschlag gelangt. Um eine derartige Zentrierung zu erzielen, ist jedoch die Ringdichtung 84 im Bereich der einander zugewendeten Rohrflansche 75 und 76 radial derart versetzt, daß sich einerseits gegenüber einem zylindrischen Innenumfang 73 des ersten Rohrelements 71 und einem zylindrischen Innenumfang 74 des zweiten Rohrelements 72 ein erster Totraum 86 im Bereich einer Öffnung 89 der Ringdichtung 84 ergibt, während andererseits im Bereich des zylindrischen Innenumfangs 73 bzw. des zylindrischen Innenumfangs 74 ein dem ersten Totraum 86 entsprechender Überstand 87 der Ringdichtung 84 vorliegt. Aufgrund einer derartigen Zentrierung, wie in Fig. 9 gezeigt, ergibt sich ferner auf dem gegenüberliegenden Umfangsbereich 77, 78 der Flanschverbindung 70 ein zweiter Totraum 88, d.h., die Ringdichtung 84 ist gegenüber dem ersten Rohrflansch 75 und dem zweiten Rohrflansch 76 in Radialrichtung um eine gewisse Distanz nach innen versetzt. Bei der aus Fig. 9 ersichtlichen Flanschverbindung nach dem Stand der Technik ist jedoch eine präzise Zentrierung der Ringdichtung 84 infolge der verhältnismäßig hohen Toleranzen nicht möglich. Durch die bei einer solchen Anordnung auftretenden Toträume, beispielsweise Toträume 86 und 88, sowie durch den Überstand 87 der Ringdichtung 84 ergibt sich eine Beeinträchtigung und Einengung in dem lichten Durchmesser der Flanschverbindung 70. Ein weiterer Nachteil ergibt sich durch die durch das Zurückspringen der Ringdichtung 84 zwischen dem ersten Rohrflansch 75 und dem zweiten Rohrflansch 76 bedingten Toträume, d.h. des ersten Totraums 86 und des zweiten Totraums 88.

Für Flanschverbindungen für Rohre sind ferner Ringdichtungen bekannt, die aus Drehteilen bestehen, d.h. aus Teilen, die aus vollem Material gedreht sind, wobei ein entsprechender Zentrierrand an der Ringdichtung mit angedreht ist. Der Nachteil solcher bekannter Dichtungen besteht darin, daß die Werkstoffauswahl hierfür beschränkt ist und daß sie in der Herstellung außerordentlich teuer sind. Beispielsweise sind sogenannte Kragendichtungen bekannt, die aus gesintertem Polytetrafluorethylen gedreht sind.

Es sind ferner aus formgepreßten Materialien bestehende Dichtungen zum Abdichten ebener Flächen bekannt, wobei die hierfür verwendeten Materialien höhere Dicken aufweisen und infolgedessen zu dichtungstechnischen Nachteilen führen, insbesondere zu hohem Kaltfluß und schlechter chemischer Beständigkeit.

Schließlich sind auch aus mehreren Einzelteilen gefertigte Dichtungen bekannt, beispielsweise Ringdichtungen zum Abdichten einer Flanschverbindung zweier Glasrohre gemäß der DE-U 92 05 669.5. Hieraus bekannte Dichtungen bestehen insbesondere aus einer dünnen Kunststoffolie, beispielsweise aus einer Folie aus gerecktem, mikroporösem Polytetrafluorethylen, wobei diese Folie in einem Montage- oder Fixierring aufgespannt ist und mit diesem Ring verklebt oder verschweißt oder an diesem Ring mechanisch befestigt ist. Die Nachteile solcher, aus mehreren Einzelteilen zusammengefügten Dichtungen bestehen in hohen Herstellungskosten, in einem verhältnismäßig breiten Zentrierrand und, im Falle einer geliebten Verbindungsstelle mit dem äußeren Montage- oder Fixierring, in einer verhältnismäßig schlechten chemischen Beständigkeit der resultierenden Ringdichtung.

Mit Rücksicht auf den im vorangehenden geschilderten Stand der Technik liegt der vorliegenden Erfindung die Aufgabe zugrunde, ein verbessertes Verfahren zur Herstellung einer Dichtung unter Verwendung eines verdichtbaren Dichtungsmaterials, insbesondere eines Fluorpolymers, zum Abdichten von Dichtflächen, vorzugsweise zusammenpassenden, z.B. ebenen oder kugelförmig ausgebildeten Dichtflächen anzugeben, insbesondere ein Verfahren zum Herstellen einer Ringdichtung zum Abdichten von Flanschverbindungen für Rohre, wobei diese Dichtung am Außen- und/oder Innenumfang mit einem entsprechenden Zentrierbund versehen wird.

Diese Aufgabe wird erfindungsgemäß dadurch gelöst, daß zur Bildung des Zentrierbundes bzw. der Zentrierbundabschnitte ein vorgegebener Außen- und/oder Innenrandbereich bzw. mehrere vorgegebene, umfangsmäßig voneinander beabstandete Außen- und/oder Innenrandbereiche der zunächst in einem Vorfertigungszustand, insbesondere in Form einer Lochscheibe vorliegenden Dichtung unter einem vorwählbaren Winkel, z.B. in einer Richtung im wesentlichen rechtwinklig zur Dichtungsebene umgebördelt und sodann der (die) umgebördelte(n) Außen- und/oder Innenrandbereich(e) verdichtet wird (werden).

Vorzugsweise erfolgt das Verdichten des (der) umgebördelten Außen- und/oder Innenrandbereichs (-bereiche) durch Anwendung von mechanischem Druck auf das Dichtungsmaterial, wobei außerdem aber auch das Verdichten zusätzlich und gleichzeitig durch Anwendung von Wärme auf dieses Dichtungsmaterial erfolgen kann.

Insbesondere ist es vorteilhaft, wenn der (die) umgebördelte(n) Außen- und/oder Innenrandbereich(e) auf ein Mehrfaches der Dichte des Materials der Gesamtdichtung verdichtet wird (werden).

Im Rahmen des erfindungsgemäßen Verfahrens ist es weiterhin vorteilhaft, wenn als Dichtungsmaterial für die Gesamtdichtung Polytetrafluorethylen (PTFE) verwendet wird.

Außerordentlich günstig ist es, wenn als Dichtungsmaterial multidirektional expandiertes Polytetrafluorethylen (ePTFE) verwendet wird. Unter "multidirektional expandiert" ist ein Vorgang zu verstehen, gemäß welchem das Polytetrafluorethylen in einer vorgegebenen Anzahl von in einer gemeinsamen X-Y-Ebene liegenden Richtungen gleichzeitig gereckt wird, zumindest aber biaxial gereckt wird, wie dies bereits bekannt ist. Ein solcher Vorgang kann somit auch als multiaxiales Recken oder Expandieren von Polytetrafluorethylen bezeichnet werden. Im übrigen könnte anstelle eines multidirektional expandierten PTFE in bestimmten Anwendungsfällen unidirektional expandiertes PTFE als Dichtungsmaterial verwendet werden.

Aus einem Dichtungsmaterial der erläuterten Art wird beispielsweise zunächst eine Lochscheibe herausgestanzt, anschließend wird ein vorgegebener Außenrandbereich dieser Lochscheibe in einer Richtung im wesentlichen rechtwinklig zur Dichtungsebene umgebördelt und anschließend verdichtet. Wird beispielsweise als Dichtungsmaterial multidirektional expandiertes PTFE mit einer Dichte von 0,7 g/cm³ verwendet, dann wird bei Anwendung des erfindungsgemäßen Verfahrens die resultierende Ringdichtung mit einem umgebördelten, verdichteten Zentrierbund versehen, dessen Dichte z.B. 1,9 g/cm³ beträgt. In bestimmten Anwendungsfällen kann die Dichte etwa das 3-fache der Dichte des Ausgangs-Dichtungsmaterials, beispielsweise ca. 2,1 g/cm³ betragen.

In gewissen Anwendungsfällen sind aber auch andere Verdichtungsverhältnisse bezüglich des umgebördelten Außen- und/oder Innenrandbereichs, d.h. also des resultierenden Zentrierbundes, denkbar. Eine Anfangsdichte des Ausgangsmaterials von 0,7 g/cm³ hat sich im übrigen als die beste Dichte gezeigt, da sich eine Dichtung mit dieser Dichte den geometrischen Formen der Dichtfläche am besten anpaßt.

Schließlich besteht bei dem erfindungsgemäßen Verfahren noch die Möglichkeit, die resultierende Dichtung dadurch elektrisch leitfähig zu machen, daß das PTFE bzw. ePTFE zuvor mit elektrisch leitfähigen Teilchen, vorzugsweise Graphit-Teilchen gefüllt wird.

Der vorliegenden Erfindung liegt ferner die Aufgabe zugrunde, eine verbesserte Vorrichtung zur Herstellung einer Dichtung unter Verwendung eines verdichtbaren Dichtungsmaterials, insbesondere eines Fluorpolymers, zum Abdichten von Dichtflächen, vorzugsweise zusammenpassenden Dichtflächen zu schaffen, insbesondere eine Vorrichtung zum Herstellen einer Ringdichtung zum Abdichten von Flanschverbindungen für Rohre, wobei diese Dichtung am Außen- und/oder Innenumfang mit einem Zentrierbund bzw. mit mehreren umfangsmäßig voneinander beabstandeten Zentrierbundabschnitten versehen ist, und insbesondere eine Vorrichtung zur Durchführung des Verfahrens gemäß der Erfindung.

Die erfindungsgemäße Vorrichtung weist im wesentlichen auf:
a) eine Einrichtung zum Tragen und Zentrieren der zunächst in einem Vorfertigungszustand, insbesondere in Form einer Lochscheibe vorliegenden Dichtung,
b) eine Einrichtung zum Umbördeln eines vorgegebenen Außen- und/oder Innenrandbereichs bzw. mehrerer vorgegebener, umfangsmäßig voneinander beabstandeter Außen- und/oder Innenrandbereiche der Dichtung und zum Verdichten des (der) umgebördelten Außen- und/oder Innenrandbereichs (-bereiche) unter Anwendung von mechanischem Druck, gegebenenfalls auch unter zusätzlicher und gleichzeitiger Anwendung von Wärme; und
c) eine Einrichtung zum Erzeugen von Relativbewegungen zwischen der zum Tragen und Zentrieren der Dichtung dienenden Einrichtung und der zum Umbördeln des vorgegebenen Außen- und/oder Innenrandbereichs der Dichtung und zum Verdichten des umgebördelten Bereichs dienenden Einrichtung für den Ablauf dieser aufeinanderfolgenden Vorgänge des Umbördelns und des Verdichtens zur Bildung des Zentrierbundes bzw. der Zentrierbundabschnitte.

Gemäß weiterer vorteilhafter Ausgestaltung dieser erfindungsgemäßen Vorrichtung besteht die Einrichtung zum Tragen und Zentrieren der zunächst in einem Vorfertigungszustand vorliegenden Dichtung im wesentlichen aus einem stempelförmig ausgebildeten Form- und Zentrierteil mit einem Sockelteil und einem plattenartigen Tragteil, wobei dieses Form- und Zentrierteil innerhalb einer Ausnehmung eines Basisteils der Vorrichtung federnd abgestützt ist.

Vorzugsweise ist innerhalb der Ausnehmung des Basisteils der Vorrichtung eine Feder, z. B. Tellerfeder angeordnet, auf welcher das plattenförmige Tragteil des Form- und Zentrierteils abgestützt ist, während der Sockelteil des Form- und Zentrierteils innerhalb einer zentralen Bohrung des Basisteils beweglich geführt ist.

In bevorzugter Weise kann das plattenförmige Tragteil des Form- und Zentrierteils in der Weise ausgebildet sein, daß es eine tragende Fläche zum Tragen und Zentrieren der Dichtung aufweist, wobei oberhalb dieser tragenden Fläche ein Zentrierdorn vorgesehen ist, der innerhalb der Vorrichtung relativ zu dem Form- und Zentrierteil verschiebbar ist.

Im Falle der zuletzt erläuterten Ausgestaltung der Vorrichtung kann vorzugsweise der Zentrierdorn an seinem dem Form- und Zentrierteil abgewendeten Ende an einem Oberteil der Vorrichtung starr befestigt sein, während der Zentrierdorn in seinem Inneren einen Hohlraum aufweisen kann, in welchem eine Ansatzschraube angeordnet ist, die an ihrem dem Form- und Zentrierteil zugewendeten Ende einen Niederhalter trägt, der mit dem die Dichtung tragenden Form- und Zentrierteil zusammenwirkt.

Gemäß weiterer vorteilhafter Ausgestaltung der Vorrichtung nach der Erfindung ist vorgesehen, daß die Einrichtung zum Umbördeln des vorgegebenen Außen- und/oder Innenrandbereichs der Dichtung und zum Verdichten des umgebördelten Außen- und/oder Innenrandbereichs aus vier gleichen, kreissektorförmig angeordneten und beweglich gelagerten Backen besteht, die in einem Bereich zwischen dem Basisteil und dem Oberteil der Vorrichtung konzentrisch um den Zentrierdorn herum angeordnet sind und auf ihren jeweiligen, dem Form- und Zentrierteil zugewendeten Seiten eine für die Ausführung der aufeinanderfolgenden Vorgänge des Umbördelns und des Verdichtens erforderliche Oberflächenausgestaltung aufweisen.

Mit besonderem Vorteil wird eine solche Konstruktionsweise vorgesehen, daß die vier Backen für den Vorgang des Umbördelns zunächst in Axialrichtung der Vorrichtung nach abwärts und anschließend für den Vorgang des Verdichtens im wesentlichen in Radialrichtung der Vorrichtung bewegbar sind.

Darüberhinaus kann die Vorrichtung nach der Erfindung in der Weise ausgestaltet sein, daß die am Oberteil der Vorrichtung radial bewegbar angebrachten Backen gemeinsam mit dem an dem Oberteil starr befestigten Zentrierdorn in Axialrichtung der Vorrichtung bewegbar sind.

Hierbei kann vorzugsweise jeder Backen auf seiner dem Form- und Zentrierteil zugewendeten Seite, in Radialrichtung der Vorrichtung von außen nach innen gesehen, eine konische Außenseite, eine sich daran anschließende flache, ringförmig verlaufende Unterseite, eine sich daran anschließende zylindrische Innenseite und eine sich daran anschließende ebene Auflageseite aufweisen.

Hierbei handelt es sich um eine für die Ausführung der aufeinanderfolgenden Vorgänge des Umbördelns und des Verdichtens außerordentlich günstige Ausgestaltung der dem Form- und Zentrierteil zugewendeten Seite der Backen der Einrichtung zum Umbördeln und Verdichten, d.h. zur Bildung des erwünschten Zentrierbundes der Ringdichtung.

In bevorzugter Weise weist das Basisteil der Vorrichtung auf einer den Backen zugewendeten Seite eine konische Führungsfläche auf, die ringförmig verläuft und zur Erzeugung einer im wesentlichen radial gerichteten Bewegung der Backen mit der jeweiligen konischen Außenseite dieser Backen zusammenwirkt.

Die Erfindung wird im nachfolgenden im Rahmen von Ausführungsbeispielen näher erläutert, wobei auf die beigefügten Zeichnungen Bezug genommen wird.

In diesen zeigen:
- **Fig. 1**: eine erste Ausführungsform einer Ringdichtung im Schnitt (Schnittansicht gemäß II-II der Fig. 2);
- **Fig. 2**: eine Ansicht der Ringdichtung gemäß Fig. 1 in Richtung des Pfeiles Pf₁ nach Fig. 1;
- **Fig. 3**: schematisch eine weitere Ausführungsform einer Ringdichtung im Schnitt, entsprechend der Schnittansicht gemäß Fig. 1;
- **Fig. 4**: eine noch weitere Ausführungsform einer Ringdichtung im Schnitt, entsprechend der Schnittansicht gemäß Fig. 1;
- **Fig. 5**: eine schematische Schnittansicht einer Vorrichtung zur Herstellung einer Ringdichtung zum Abdichten von Flanschverbindungen für Rohre, wobei in der linken Hälfte der Fig. 5 die Vorrichtung im geöffneten Zustand und in der rechten Hälfte von Fig. 5 die Vorrichtung im geschlossenen Zustand dargestellt ist;
- **Fig. 6**: eine der Fig. 5 entsprechende Schnittansicht der Vorrichtung in deren geschlossenem Zustand;
- **Fig. 7**: eine Teilansicht der in Fig. 6 dargestellten Vorrichtung in Richtung VI-VI nach Fig. 6;
- **Fig. 8**: eine schematische Schnittansicht einer Flanschverbindung für Rohre unter Verwendung einer Ringdichtung nach der Erfindung;
- **Fig. 9**: eine schematische Schnittansicht einer Flanschverbindung für Rohre unter Verwendung einer Dichtung nach dem Stand der Technik;
- **Fig. 10**: schematisch eine weitere Ausführungsform einer Ringdichtung im Schnitt (Schnittansicht gemäß XI-XI der Fig. 11);
- **Fig. 11**: eine Ansicht der Ringdichtung gemaß Fig. 10 in Richtung des Pfeiles Pf₂ nach Fig. 10;
- **Fig. 12**: schematisch eine weitere Ausführungsform einer Ringdichtung im Schnitt (Schnittansicht gemäß XIII-XIII der Fig. 13);
- **Fig. 13**: eine Ansicht der Ringdichtung gemäß Fig. 12 in Richtung des Pfeiles Pf₃ nach Fig. 12;
- **Fig. 14**: schematisch noch eine weitere Ausführungsform einer Ringdichtung im Schnitt (Schnittansicht gemäß XV-XV der Fig. 15); und
- **Fig. 15**: eine Ansicht der Ringdichtung gemaß Fig. 14 in Richtung des Pfeiles Pf₄ nach Fig. 14.

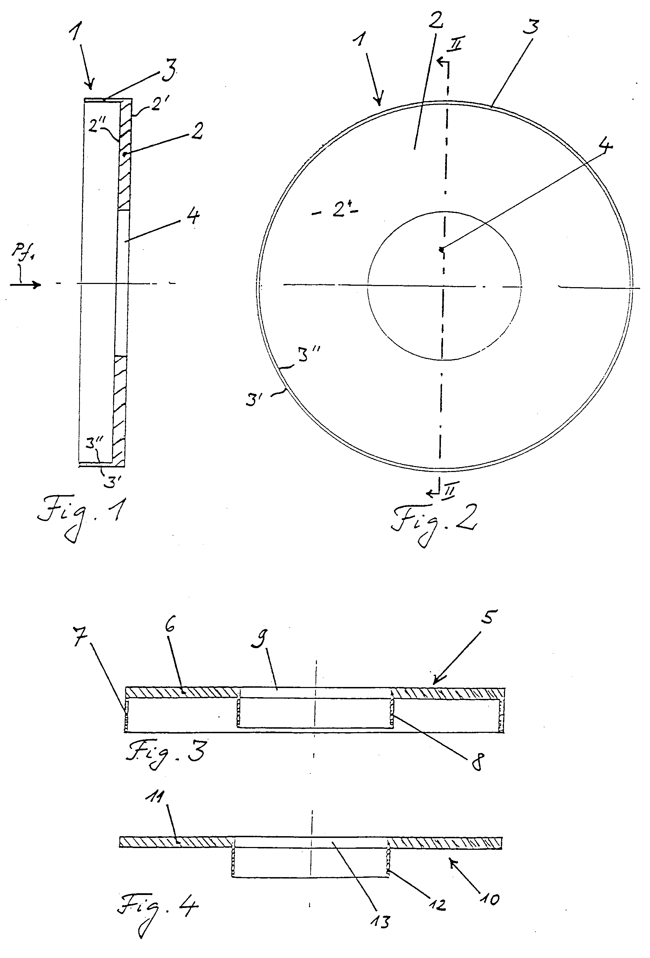

Fig. 1 zeigt schematisch eine Schnittansicht einer Ringdichtung 1 zum Abdichten von Flanschverbindungen für Rohre, wobei diese Ringdichtung 1 mit Hilfe des Verfahrens nach der Erfindung unter Verwendung eines verdichtbaren Dichtungsmaterials, insbesondere eines multidirektional expandierten Polytetrafluorethylens (ePTFE) hergestellt ist. Dieses Dichtungsmaterial liegt zunächst in Form einer ausgestanzten Lochscheibe vor, von welcher ein vorgegebener Außenrandbereich zu einem Zentrierbund 3 umgebördelt und verdichtet wird, wobei die Umbördelung im wesentlichen in einer Richtung rechtwinklig zur Ebene des Ringteils 2 der Ringdichtung 1 verläuft. Der gewählte Umbördelungswinkel kann in bestimmten Anwendungsfällen anstelle 90° z.B. auch 60° betragen bzw. noch andere Werte annehmen. Im mittleren Bereich des Ringteils 2 der Ringdichtung 1 ist eine Öffnung 4 ausgestanzt, deren Durchmesser dem lichten Durchmesser der Flanschverbindung entspricht, in welcher die Ringdichtung 1 letztendlich eingebaut wird. Ein Ausführungsbeispiel einer solchen Flanschverbindung für Rohre ergibt sich aus Fig. 8 und wird weiter unten noch im einzelnen beschrieben.

Wenn, wie bereits oben erwähnt, als Ausgangsmaterial für die Ringdichtung 1 ein multidirektional expandiertes Polytetrafluorethylen verwendet wird, dessen Dichte 0,7 g/cm³ beträgt, so wird im Zuge der Durchführung des erfindungsgemäßen Verfahrens zur Herstellung dieser Dichtung der entsprechende, zur Bildung des Zentrierbundes 3 vorgesehene, umgebördelte Außenrandbereich z.B. auf 1,9 g/cm³, unter Umständen sogar auf ca. das Dreifache der Dichte des Ausgangsmaterial verdichtet, d.h. auf eine Dichte von ca. 2,1 g/cm³.

Die Dichte des ebenen, flachen Ringteils 2 der Ringdichtung 1 bleibt zunächst unverändert, jedoch wird beim Einbau der Ringdichtung im Bereich der Flanschverbindung beim gegenseitigen Zusammenpressen der aneinander angrenzenden Flansche ebenfalls eine Verdichtung dieses Ringteils auf eine Dichte von ca. 1,9 g/cm³ oder 2,1 g/cm³ bewirkt.

Aus Fig. 1 und 2 ist noch ersichtlich, daß der Ringteil 2 der Ringdichtung 1 eine ebene erste Oberfläche 2' sowie eine ebene zweite Oberfläche 2'' aufweist, während der Zentrierbund 3 eine erste ringförmige Oberfläche 3' und eine zweite ringförmige Oberfläche 3'' aufweist.

Ein weiteres Ausführungsbeispiel einer Ringdichtung 5 ergibt sich aus Fig. 3 In diesem Falle weist die Ringdichtung 5 sowohl an ihrem Außenumfang einen ersten Zentrierbund 7 als auch an ihrem Innenumfang einen zweiten Zentrierbund 8 auf, wobei auch in diesem Falle die Zentrierbunde 7 bzw. 8 durch einen Vorgang des Umbördelns eines entsprechenden Außenrandbereichs bzw. eines entsprechenden Innenrandbereichs der zunächst in Form einer Lochscheibe vorliegenden Dichtung in einer Richtung im wesentlichen rechtwinklig zur Dichtungsebene der Ringdichtung 5 erzeugt wurden, während anschließend die jeweiligen umgebördelten Außen- und Innenrandbereiche in gleicher Weise verdichtet wurden, wie dies bereits anhand der in den Fig. 1 und 2 gezeigten Ringdichtung erläutert wurde. Die Ringdichtung 5 gemäß Fig. 3 weist ebenfalls einen Ringteil 6 auf, welcher nach dem Umbördeln der beiden Außen- und Innenrandbereiche verbleibt und eine mittlere Öffnung 9 der Ringdichtung 5 umgibt.

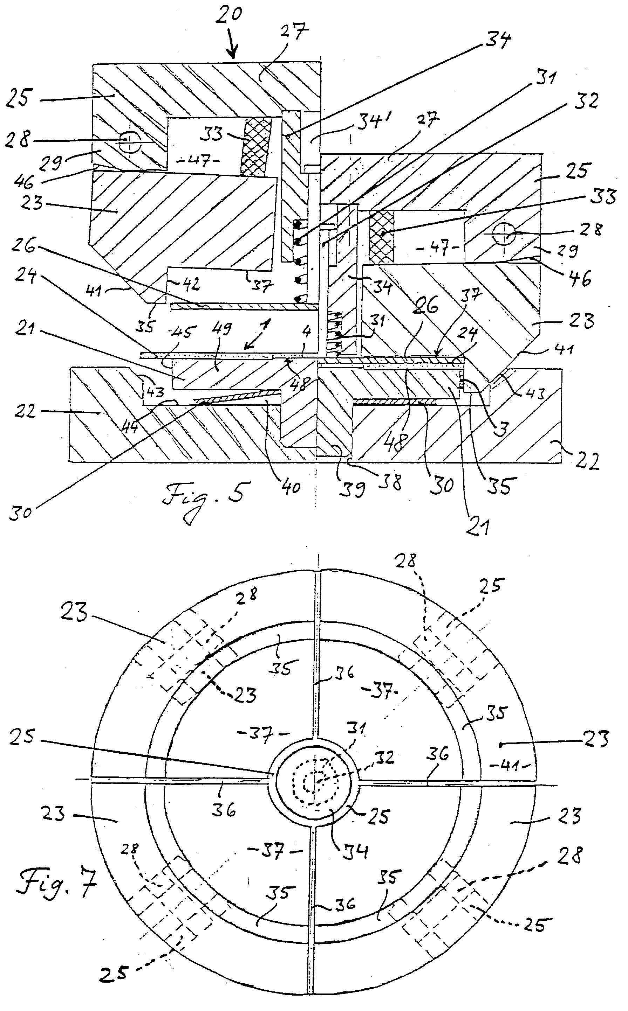

Aus Fig. 4 ergibt sich ein weiteres Ausführungsbeispiel einer Ringdichtung 10, welche sich gegenüber dem Ausführungsbeispiel nach Fig. 3 dadurch unterscheidet, daß nunmehr lediglich ein Innenrandbereich der zunächst in Form einer Lochscheibe vorliegenden Dichtung umgebördelt und zur Bildung eines Zentrierbundes 12 verdichtet wurde. Als Ausgangsmaterial für die Ringdichtung 10 wird vorzugsweise ebenfalls ein multidirektional expandiertes Polytetrafluorethylen verwendet, wobei im Zuge des Herstellungsverfahrens die Dichte eines Ringteils 11 der Ringdichtung 10 unverändert bei ca. 0,7 g/cm³ verbleibt, während der Zentrierbund 12 auf das ca. Dreifache verdichtet wurde, d.h. auf eine Dichte von ca. 2,1 g/cm³. Die Ringdichtung 10 gemäß Fig. 4 weist ebenfalls eine mittlere Öffnung 13 auf, entsprechend der mittleren Öffnung 9 der Ringdichtung 5 gemäß Fig. 3, wobei in diesen Fällen der lichte Durchmesser der Öffnung 9 bzw. 13 etwas geringer ist als der lichte Durchmesser der resultierenden Rohrflanschverbindung.

Wie bereits oben erläutert, sind die Ringdichtungen gemäß den Ausführungsbeispielen nach den Fig. 1 bis 4 vorzugsweise aus einem multidirektional expandierten Polytetrafluorethylen hergestellt, so daß sich bei allen Ausführungsbeispielen der Ringdichtungen 1 bzw. 5 bzw. 10 im Bereich deren jeweiligen Ringteile 2 bzw. 6 bzw. 11 ein weicher, anpassungsfähiger Dichtungsbereich ergibt, während aufgrund der Zentrierbunde 3 bzw. 7 und 8 bzw. 12 eine exakte Zentrierung der jeweiligen Dichtung im Bereich der resultierenden Flanschverbindung gewährleistet ist.

Aus Fig. 8 ergibt sich ein Ausführungsbeispiel einer solchen Flanschverbindung 50, bei welcher eine Ringdichtung 1 gemäß Fig. 1 und 2 eingesetzt ist. Die Flanschverbindung 50 gemäß Fig. 8 weist ein erstes Rohrelement 51 mit einem zylindrischen Innenumfang 53 auf, ferner ein zweites Rohrelement 52 mit einem entsprechenden zylindrischen Innenumfang 54. Das erste Rohrelement 51 ist mit einem ersten Rohrflansch 55 versehen, während das zweite Rohrelement 52 mit einem entsprechenden zweiten Rohrflansch 56 versehen ist. Zwischen dem ersten Rohrflansch 55 und dem zweiten Rohrflansch 56 ist die Ringdichtung 1 gemäß Fig. 1 eingebaut, derart, daß der Ringteil 2 der Ringdichtung 1 genau in den Zwischenraum zwischen den beiden aufeinander zu weisenden Rohrflanschen 55 und 56 zu liegen kommt, während der Zentrierbund 3 der Ringdichtung 1 bei der in Fig. 8 gezeigten Orientierung der Ringdichtung 1 sich eng an den Außenumfang 58 des Rohrflansches 56 anlegt. Natürlich könnte die Orientierung der Ringdichtung 1 auch in einer entgegengesetzten Richtung sein, derart, daß der Zentrierbund 3 der Ringdichtung 1 sich in entsprechender Weise an den Außenumfang 57 des Rohrflansches 55 anlegt.

In jedem Falle ist gewährleistet, daß die Zentrierung der Ringdichtung 1 unmittelbar an dem Flansch 56 bzw. dem Flansch 55 erfolgt, mit dem Ergebnis, daß sich weder im Bereich des Außenumfangs noch im Bereich des Innenumfangs der resultierenden Flanschverbindung Toträume ergeben, ferner ist bei der Ausführungsform gemäß Fig. 8 gewährleistet, daß kein Überstehen der Ringdichtung in den lichten Durchmesser der resultierenden Flanschverbindung hinein erfolgt, in völligem Gegensatz zu einer Flanschverbindung gemäß dem Stand der Technik, wie weiter oben bereits anhand der Fig. 9 erläutert.

In diesem Zusammenhang ist noch darauf hinzuweisen, daß bei einer derartigen Flanschverbindung gemäß dem Stand der Technik der zweite Totraum 88 so groß werden kann, daß die Planparallelität der beiden Dichtflächen in Frage gestellt ist, was letztendlich zu einem Kippen der Rohre führen könnte. Auch ein solcher Nachteil läßt sich aufgrund der erfindungsgemäß ausgebildeten Dichtung vollständig vermeiden.

Die exakte Zentrierung der Ringdichtung 1 im Bereich der Flanschverbindung 50 gemäß Fig. 8 ist, wie bereits erläutert, dadurch gewährleistet, daß die Ringdichtung 1 mit einem Zentrierbund 3 versehen ist, der aus Dichtungsmaterial besteht, welches auf das Mehrfache der Dichte des Ausgangsmaterials für die Ringdichtung 1 verdichtet ist. Im Zuge der Montage der Flanschverbindung 50 gemäß Fig. 8 erfolgt nun ein gegenseitiges Zusammenpressen der gegenseitig abzudichtenden Rohrflansche 55 und 56 dadurch, daß im Bereich dieser Flanschverbindung 50 eine erste Druckscheibe 59 in Zuordnung zu dem ersten Rohrflansch 55 sowie eine zweite Druckscheibe 60 in Zuordnung zu dem zweiten Rohrflansch 56 vorgesehen sind, wobei diese Druckscheiben 59 und 60 mittels eines Spannbolzens 61 fest miteinander verbunden werden, indem auf das eine Ende des Spannbolzens 61 eine erste Mutter 62 und auf das gegenüberliegende Ende des Spannbolzens 61 eine zweite Mutter 63 aufgeschraubt werden. Im Zuge des gegenseitigen Zusammenpressens der Rohrflansche 55 und 56 erfolgt nun eine Verdichtung des Materials des Ringteils 2 der Ringdichtung 1, derart, daß sich ebenfalls eine Verdichtung auf das Mehrfache gegenüber dem Ausgangsmaterial ergibt, mit dem Ergebnis, daß das Ringteil 2 die gleiche Dichte wie der Zentrierbund 3 erhält.

Anhand der Figuren 5, 6 und 7 wird nunmehr ein Ausführungsbeispiel einer nach der Erfindung ausgebildeten Vorrichtung zur Herstellung einer Ringdichtung zum Abdichten von Flanschverbindungen für Rohre, zum Beispiel für Glasrohre, im einzelnen erläutert. Diese Vorrichtung 20 besteht im wesentlichen aus einem unteren, plattenartigen Basisteil 22, einem oberhalb eines mittleren Bereichs des Basisteils 22 angeordneten Form- und Zentrierteil 21 zum Tragen und Zentrieren der zunächst in einem Vorfertigungszustand, insbesondere in Form einer Lochscheibe vorliegenden Ringdichtung aus einem Dichtungsmaterial 24, einer daraufhin in Axialrichtung oberhalb des Form- und Zentrierteils 21 angeordneten Einrichtung zum Umbördeln eines vorgegebenen Außenrandbereichs des Dichtungsmaterials 24 und zum anschließenden Verdichten des umgebördelten Außenrandbereichs des Dichtungsmaterials 24, sowie ferner aus einem unmittelbar oberhalb der Einrichtung 23 angeordneten Oberteil 25, welches seinerseits einen Innenbereich 27 sowie einen Außenbereich 29 aufweist. Darüber hinaus weist die Vorrichtung 20 eine im einzelnen nicht gezeigte Einrichtung zum Erzeugen von Relativbewegungen zwischen dem Form- und Zentrierteil 21 und der Einrichtung 23 für den Ablauf der noch weiter unten im einzelnen zu erläuternden, aufeinanderfolgenden Vorgänge des Umbördelns und des Verdichtens des Dichtungsmaterials 24 zur Ausbildung des Zentrierbundes 3 der resultiertenden Ringdichtung 1, wie diese bereits anhand der Figur 1 gezeigt ist.

Das im wesentlichen stempelförmig ausgebildete Form- und Zentrierteil 21 weist einen Sockelteil 39 sowie einen plattenartigen Tragteil 49 auf, wobei dieses Form- und Zentrierteil 21 innerhalb einer Ausnehmung 40 des Basisteils 22 federnd abgestützt ist. Zu diesem Zweck ist innerhalb der Ausnehmung 40 des Basisteils 22 eine Tellerfeder 30 angeordnet, auf welcher sich der plattenförmige Tragteil 49 des Form- und Zentrierteils 21 abstützt. Andererseits ist der Sockelteil 39 des Form- und Zentrierteils 21 innerhalb einer zentralen Bohrung 38 des Basisteils 22 beweglich geführt.

Ferner weist der plattenförmige Tragteil 49 des Form- und Zentrierteils 21 eine ebene, tragende Fläche 48 zum Tragen und Zentrieren der aus dem Dichtungsmaterial 24 zu formenden Ringdichtung 1 und eine zylindrische Außenseite 45 auf.

Die Vorrichtung 20 weist ferner einen oberhalb des Form- und Zentrierteils 21, genauer gesagt oberhalb der ebenen, tragenden Fläche 48 einen Zentrierdorn 34 auf, welcher innerhalb der Vorrichtung 20 relativ zu dem Form- und Zentrierteil 21 verschiebbar ist.

Dieser Zentrierdorn 34 ist an seinem dem Form- und Zentrierteil 21 abgewendeten Ende an dem Oberteil 25 starr befestigt, während der Zentrierdorn 34 im Inneren einen Hohlraum 34' aufweist, in welchem eine Ansatzschraube 32 angeordnet ist.

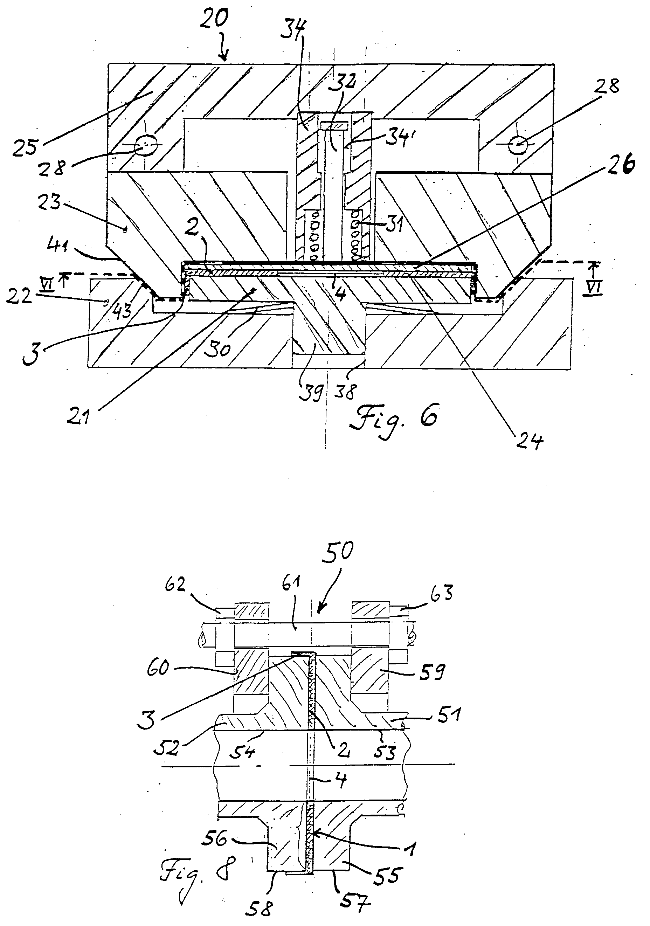

Diese Ansatzschraube 32 trägt an ihrem dem Form- und Zentrierteil 21 zugewendeten Ende einen Niederhalter 26, der mit dem die Ringdichtung 1 tragenden Form- und Zentrierteil 21 zusammenwirkt. Hierbei gelangt beim Ausführen der Vorgänge des Umbördelns und Verdichtens dieser Niederhalter 26 zur unmittelbaren Auflage auf die Oberfläche der Ringdichtung 1, wie dies insbesondere aus Figur 6 zu ersehen ist.

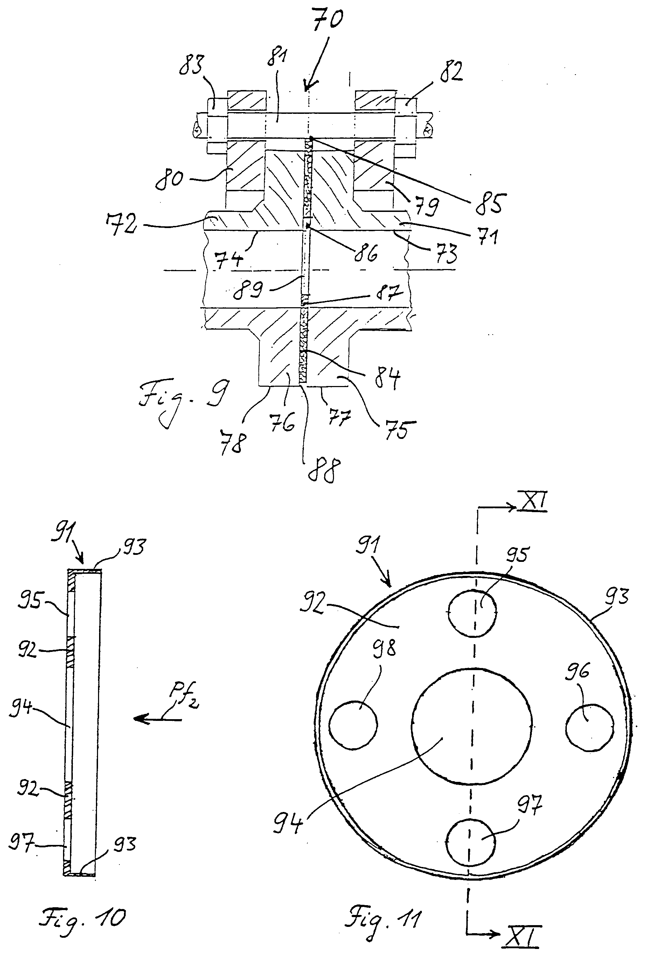

Die Einrichtung zum Umbördeln eines vorgegebenen Außenrandbereichs der Ringdichtung 1 und zum anschließenden Verdichten dieses umgebördelten Außenrandbereichs besteht im wesentlichen aus vier gleichen, sektorartigen, kreisförmig angeordneten und beweglich gelagerten Backen 23 (vergl. Fig. 7), die in einem Bereich zwischen dem Basisteil 22 und dem Oberteil 25 der Vorrichtung 20 konzentrisch um den Zentrierdorn 34 herum angeordnet sind und auf ihren jeweiligen, dem Form- und Zentrierteil 21 zugewendeten Seiten eine für die Ausführung der aufeinanderfolgenden Vorgänge des Umbördelns und des Verdichtens erforderliche Oberflächengestaltung aufweisen. Im einzelnen weist jeder Backen 23 auf seiner dem Form- und Zentrierteil 21 zugewendeten Seite, in Radialrichtung der Vorrichtung 20 von außen nach innen gesehen, eine konische Außenseite 41, eine sich daran anschließende, flache und ringförmig verlaufende Unterseite 35, eine sich daran anschließende, zylindrische Innenseite 42 sowie eine sich daran anschließende, ebene Auflageseite 37 auf. Diese Auflageseite 37 gelangt zur unmittelbaren Auflage auf dem Niederhalter 26, wenn das Umbördeln und das Verdichten des vorgegebenen Außenrandbereichs des Dichtungsmaterials 24 erfolgt. Gleichzeitig wirkt die zylindrische Innenseite 42 der Backen 23 mit der zylindrischen Außenseite 45 des plattenförmigen Tragteils 49 zusammen.

Im einzelnen werden die Backen 23 für den Vorgang des Umbördelns zunächst in Axialrichtung der Vorrichtung 20 nach abwärts in Richtung zu dem Form- und Zentrierteil 21 hin und anschließend für den Vorgang des Verdichtens im wesentlichen in Radialrichtung der Vorrichtung 20 bewegt.

Hierbei dient insbesondere zum Umbördeln des Dichtungsmaterials 24 die ringförmig verlaufende, ebene Unterseite 35 der Backen 23, während andererseits für den Vorgang des Verdichtens des umgebördelten Randbereichs die zylindrische Innenseite 45 der Backen 23 verwendet wird, welche gegen die zylindrische Außenseite 45 des plattenförmigen Tragteils 49 gepreßt wird.

Die am Oberteil 25 der Vorrichtung im wesentlichen radial bewegbar angebrachten Backen 23 sind im übrigen gemeinsam mit dem am Oberteil 25 starr befestigten Zentrierdorn 34 in Axialrichtung der Vorrichtung 20 bewegbar.

Ferner ist jeder Backen 23 auf seiner dem Form- und Zentrierteil 21 abgewendeten Seite mittels einer in einem Innenraum 47 zwischen dem Oberteil 25 und den Backen 23 angeordneten Druckfeder 33, z.B. in Form einer Gummifeder oder Spiralfeder, mit dem Oberteil 25 der Vorrichtung 20 verbunden. Schließlich ist der Zentrierdorn 34 in einem dem Niederhalter 26 zugewendeten Bereich auf einer Druckfeder 31 abgestützt, die innerhalb einer hohlzylindrischen Aussparung des Zentrierdorns 34 angeordnet ist und die Ansatzschraube 32 unmittelbar umgibt.

Wie sich aus der linken Hälfte der Figur 5 ersehen läßt, wird zunächst zum Zwecke des Einbringens des Dichtungsmaterials 24 in die Vorrichtung 20, genauer gesagt zum Zwecke des Auflegens des Dichtungsmaterials 24 auf die (z.B. ebene) tragende Fläche 48 des Form- und Zentrierteils 21 das Oberteil 25 gemeinsam mit den vier Backen 23 und dem Zentrierdorn 34 sowie mit dem Niederhalter 26 in Axialrichtung nach aufwärts bewegt, so daß das Form- und Zentrierteil 21 frei zugänglich ist. Gleichzeitig wird hierbei in Folge der Wirkung der Tellerfeder 30 das Form- und Zentrierteil 21 in Axialrichtung um einen gewissen Betrag nach oben verschoben.

Wie sich ferner aus der linken Hälfte der Figur 5 ersehen läßt, werden die Backen 23 während des Vorganges des axial nach oben gerichteten Verschiebens gleichzeitig um einen gewissen Betrag nach auswärts versetzt, wobei für diesen Bewegungsvorgang das Oberteil 25 an seiner den jeweiligen Backen 23 zugewandten Unterseite eine Abschrägung 46 aufweist. Aus den Figuren 5 und 7 wird noch ersichtlich, daß die mit den jeweiligen Backen 23 zusammenwirkenden Oberteile 25 der Vorrichtung 20 im Bereich ihrer Außenbereiche 29 jeweils mit einem Paßstift 28 versehen sind. Wie bereits oben erläutert, werden für das Verdichten des umgebördelten Außenrandbereichs des Dichtungsmaterials 24 die vier Backen 23 in Radialrichtung um einen gewissen Betrag nach innen verschoben, wobei zu diesem Zweck das Basisteil 22 der Vorrichtung 20 auf einer den Backen 23 zugewendeten Seite eine ringförmig verlaufende konische Führungsfläche 43 aufweist, welche zur Erzeugung der im wesentlichen radial gerichteten Bewegung der Backen 23 mit deren jeweiligen, konischen Außenseiten 41 zusammenwirkt.

Aus Figur 7 ist noch ersichtlich, daß zwischen je zwei aneinandergrenzenden Backen 23 ein sich in Radialrichtung erstreckender, länglicher Spalt 36 vorhanden ist. Aus Figur 5 ist noch ersichtlich, daß zur Abstützung der Tellerfeder 30 innerhalb der Aussparung 40 des Basisteils 22 dieses eine untere Abstützfläche 44 aufweist (vergl. linke Hälfte von Figur 5), wobei die Tellerfeder 30 sich eng an diese Abstützfläche 44 anlegt, wenn die Vorrichtung 20 komplett geschlossen ist, wie es sich aus der rechten Hälfte der Figur 5 ersehen läßt, wenn die Vorgänge des Umbördelns und Verdichtens zum Zwecke der Ausbildung des Zentrierbundes 3 vollständig abgeschlossen sind.

Die erwünschten Abmessungen bzw. Größe der resultierenden Dichtung können im übrigen dadurch geändert bzw. den vorgegebenen Einbaumöglichkeiten z.B. bei einer Flanschverbindung für Rohre dadurch angepaßt werden, daß bei der in Fig. 5 bis 7 gezeigten Vorrichtung sowohl das Form- und Zentrierteil 21 als auch der Niederhalter 26 ausgetauscht und gegebenenfalls zusätzliche, in den Zeichnungen nicht dargestellte Segmente neben der zylindrischen Innenseite 42 der Backen 23 eingesetzt werden.

Die fertige Ringdichtung 1 kann anschließend aus der Vorrichtung 20 entnommen werden.

Aus den Fig. 10 und 11 bzw. 12 und 13 bzw. 14 und 15 ergeben sich jeweilige weitere bevorzugte Ausführungsformen von nach dem erfindungsgemäßen Verfahren hergestellten Ringdichtungen zum Abdichten von Flanschverbindungen für Rohre.

Bei dem Ausführungsbeispiel einer Ringdichtung 91 gemäß Fig. 10 und 11 wird zusätzlich dem Umstand Rechnung getragen, daß in bestimmten Anwendungsfällen die Flanschverbindung aus zwei stirnseitig aufeinanderzu weisenden Rohrflanschen besteht, die gegenseitig mit Verschraubung verbunden werden. Die Ringdichtung 91 gemäß Fig. 10 und 11 weist wiederum einen scheibenförmigen Ringteil 92 auf, in welchem eine mittlere, kreisförmige Öffnung 94 ausgestanzt ist und an dessen Außenumfang ein umgebördelter, verdichteter Zentrierbund 93, entsprechend der Ausführungsform einer Ringdichtung gemäß Fig. 1, ausgebildet ist. Im Falle der Ausführungsform einer Ringdichtung 91 gemäß Fig. 10 und 11 ist jedoch zusätzlich noch vorgesehen, daß deren Ringteil 92 im Bereich zwischen der Öffnung 94 und dem Zentrierbund 93 eine vorgegebene Anzahl von ausgestanzten, im wesentlichen kreisförmigen Löchern 95, 96, 97, 98 aufweist, welche im Bereich der vorgesehenen Flanschverbindung das Hindurchführen entsprechender Schrauben erlauben, mittels der die aneinander angrenzenden Rohrflansche miteinander verschraubt werden. Anzahl und Ausbildung der in der Ringdichtung 91 vorgesehenen Löcher 95, 96, 97, 98 entsprechen selbstverständlich Anzahl und Ausführung der Bohrungen, die in den jeweiligen Rohrflanschen ausgebildet sind.

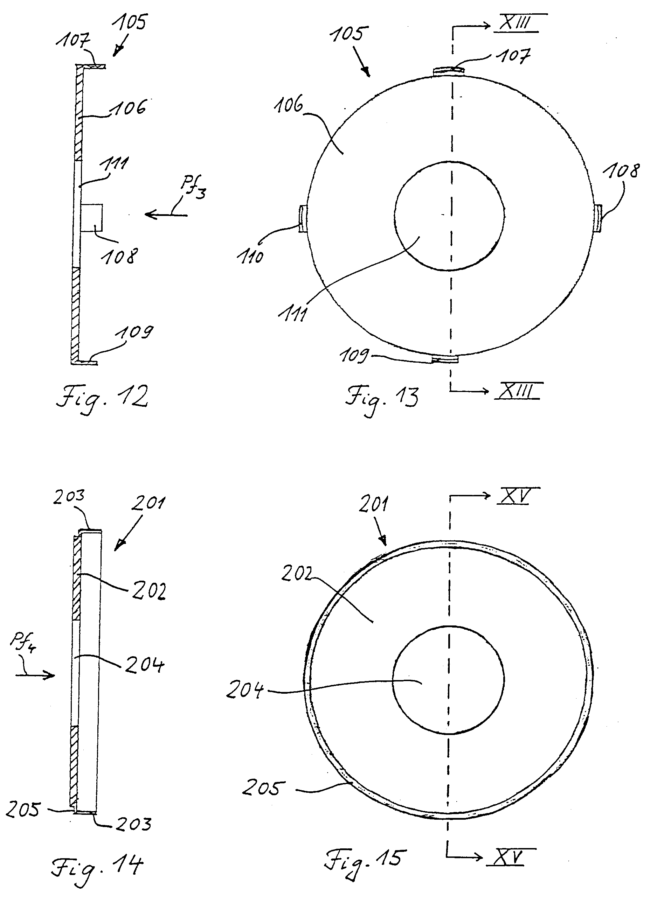

Die Ausführungsform einer Ringdichtung 105 gemäß Fig. 12 und 13 ist insofern gegenüber den bisher beschriebenen Ausführungsformen abgewandelt, als anstelle eines über den gesamten Außenrandbereich der Ringdichtung umfangsmäßig durchgehend verlaufenden, umgebördelten Zentrierbundes nunmehr mehrere umfangsmäßig voneinander beabstandete Zentrierbundabschnitte 107, 108, 109 und 110 an der Ringdichtung 105 ausgebildet sind.

Bei dem Ausführungsbeispiel gemäß Fig. 12 und 13 sind insgesamt vier kürzere, umfangsmäßig voneinander um annähernd 90° beabstandete Außenrandbereiche eines Ringteils 106 der Ringdichtung 105 in einer Richtung im wesentlichen rechtwinklig zur Dichtungsebene umgebördelt und anschließend verdichtet worden. Anstelle der in Fig. 13 gezeigten vier voneinander getrennten Zentrierbundabschnitte 107, 108, 109 und 110 könnten beispielsweise aber auch acht Zentrierbundabschnitte (oder in wählbarer Anzahl) in regelmäßig voneinander beabstandeten Anordnungen am Außenumfang des Ringteils 106 der Ringdichtung 105 vorgesehen sein. Die zentrale kreisförmige Öffnung der Ringdichtung 105 sind mit 111 bezeichnet. In dieser Gestalt ausgebildete, voneinander beabstandete Zentrierbundabschnitte oder Zentrierlippen könnten z.B. aber auch im Bereich des Innenrandes des Ringteils 106 der Ringdichtung 105 vorgesehen sein, wie dies im einzelnen in den Zeichnungen nicht dargestellt ist.

Beim Ausführungsbeispiel einer Ringdichtung 201 gemäß Fig. 14 und 15 ist schließlich gegenüber den bisherigen Ausführungsformen eine weitere Abwandlung dahingehend vorgesehen, daß ein Ringteil 202 der Ringdichtung 201 nicht nur im Bereich des Außenrandes mit einem umgebördelten und sodann verdichteten Zentrierbund 203 versehen ist, sondern daß im Bereich des Außenumfangs des Ringteils 202 noch ein ringförmiger Verstärkungsbereich 205 vorzugsweise gleichzeitig mit der Ausbildung des Zentrierbundes 203 ausgebildet wird, d.h., die Verdichtung des ringförmigen Verstärkungsbereichs 205 erfolgt z.B. gleichzeitig mit der Verdichtung des umgebördelten Außenrandbereichs zur Bildung des Zentrierbundes 203.

Eine mittlere ausgestanzte Öffnung der Ringdichtung 201 gemäß Fig. 14 und 15 ist mit 204 bezeichnet. Im übrigen entspricht die Ausführungsform der Ringdichtung 201 gemäß Fig. 14 und 15 derjenigen der Fig. 1 und 2.

Mit Hilfe des oben erläuterten, erfindungsgemäßen Verfahrens kann in besonders vorteilhafter Weise eine Dichtung, insbesondere eine Ringdichtung zum Abdichten von Flanschverbindungen für Rohre hergestellt werden, wobei diese Ringdichtung einen umgebördelten Zentrierbund aufweist und insgesamt aus einem Stück hergestellt ist. Insbesondere läßt sich die Dichtung aus einem multidirektional expandierten Polytetrafluorethylen herstellen, das eine Dichte von 0,7 g/cm³ aufweist. Im Zuge der Verdichtung des umgebördelten Zentrierbundes erhält dieser eine Dichte von 1,9 g/cm³, ggf. eine dreifache Dichte, das heißt eine Dichte von ca. 2,1 g/cm³.

Eine mit Hilfe des erfindungsgemäßen Verfahrens hergestellte Dichtung aus einem expandierten PTFE weist im übrigen eine universelle chemische Beständigkeit sowie eine Temperaturbeständigkeit im Bereich von - 240° C bis +280° C auf. Darüber hinaus weist eine solche Dichtung noch den Vorteil auf, daß sie praktisch kaltflußfrei ist. Im übrigen sind zur Herstellung einer Dichtung gemäß dem erfindungsgemäßen Verfahren auch andere Werkstoffe denkbar, das heißt also verdichtbare Dichtungsmaterialien, wie zum Beispiel Polyethylen, Faserwerkstoffe oder auch Gummi.

Es sind unterschiedliche Geometrien der resultierenden Dichtungen denkbar, das heißt also nicht nur ringförmige Dichtungen, sondern es sind auch ovale oder drei-, vier- oder sechseckig ausgebildete Dichtungen oder Dichtungen mit sonstigen geometrischen Konfigurationen, unterschiedlichen Dicken und Dichten im Prinzip denkbar.

### Bezugszeichenliste

- 1: Ringdichtung
- 2: Ringteil
- 2': erste Oberfläche des Ringteils 2
- 2'': zweite Oberfläche des Ringteils 2
- 3: Zentrierbund
- 3': erste Oberfläche des Zentrierbundes
- 3'': zweite Oberfläche des Zentrierbundes
- 4: Öffnung
- 5: Ringdichtung
- 6: Ringteil
- 7: Zentrierbund (außen)
- 8: Zentrierbund (innen)
- 9: Öffnung
- 10: Ringdichtung
- 11: Ringteil
- 12: Zentrierbund
- 13: Öffnung
- 14:
- 15:
- 16:
- 17:
- 18:
- 19:
- 20: Vorrichtung
- 21: Form- und Zentrierteil
- 22: Basisteil
- 23: Backen zum Umbördeln und Verdichten
- 24: Dichtungsmaterial für die Ringdichtung 1
- 25: Oberteil
- 26: Niederhalter
- 27: Innenbereich (von 25)
- 28: Paßstift
- 29: Außenbereich (von 25)
- 30: Tellerfeder
- 31: Druckfeder
- 32: Ansatzschraube
- 33: Druckfeder
- 34: Zentrierdorn
- 34': Hohlraum (von 34)
- 35: Unterseite
- 36: Spalt
- 37: Auflageseite
- 38: Bohrung (von 22)
- 39: Sockelteil
- 40: Ausnehmung
- 41: konische Außenseite
- 42: zylindrische Innenseite
- 43: konische Führungsfläche
- 44: Abstützfläche
- 45: zylindrische Außenseite
- 46: Abschrägung
- 47: Innenraum
- 48: tragende Fläche (von 21)
- 49: plattenförmiges Tragteil (von 21)
- 50: Flanschverbindung
- 51: erstes Rohrelement
- 52: zweites Rohrelement
- 53: zylindrischer Innenumfang (von 51)
- 54: zylindrischer Innenumfang (von 52)
- 55: erster Rohrflansch
- 56: zweiter Rohrflansch
- 57: erster Außenumfang (von 55)
- 58: zweiter Außenumfang (von 56)
- 59: erste Druckscheibe
- 60: zweite Druckscheibe
- 61: Spannbolzen
- 62: erste Mutter
- 63: zweite Mutter
- 64:
- 65:
- 66:
- 67:
- 68:
- 69:
- 70: Flanschverbindung
- 71: erstes Rohrelement
- 72: zweites Rohrelement
- 73: zylindrischer Innenumfang (von 71)
- 74: zylindrischer Innenumfang (von 72)
- 75: erster Rohrflansch
- 76: zweiter Rohrflansch
- 77: erster Außenumfang (von 75)
- 78: zweiter Außenumfang (von 76)
- 79: erste Druckscheibe
- 80: zweite Druckscheibe
- 81: Spannbolzen
- 82: erste Mutter
- 83: zweite Mutter
- 84: Ringdichtung
- 85: Zentrierrand
- 86: erster Totraum
- 87: Überstand
- 88: zweiter Totraum
- 89: Öffnung
- 90:
- 91: Ringdichtung
- 92: Ringteil
- 93: Zentrierbund
- 94: Öffnung
- 95: 1. Loch
- 96: 2. Loch
- 97: 3. Loch
- 98: 4. Loch
- 99:
- 100:
- 101:
- 102:
- 103:
- 104:
- 105: Ringdichtung
- 106: Ringteil
- 107: 1. Zentrierbundabschnitt
- 108: 2. Zentrierbundabschnitt
- 109: 3. Zentrierbundabschnitt
- 110: 4. Zentrierbundabschnitt
- 111: Öffnung
- 201: Ringdichtung
- 202: Ringteil
- 203: Zentrierbund
- 204: Öffnung
- 205: ringförmiger Verstärkungsbereich

## Patentansprüche

1. Verfahren zur Herstellung einer Dichtung unter Verwendung eines verdichtbaren Dichtungsmaterials, insbesondere eines Fluorpolymers, zum Abdichten von Dichtflächen, vorzugsweise zusammenpassenden Dichtflächen, insbesondere zum Herstellen einer Ringdichtung zum Abdichten von Flanschverbindungen für Rohre, wobei die Dichtung am Außen- und/oder Innenumfang mit einem Zentrierbund bzw. mit mehreren umfangsmäßig voneinander beabstandeten Zentrierbundabschnitten versehen wird,
**dadurch gekennzeichnet,**
daß zur Bildung des Zentrierbundes bzw. der Zentrierbundabschnitte ein vorgegebener Außen- und/oder Innenrandbereich bzw. mehrere vorgegebene, umfangsmäßig voneinander beabstandete Außen- und/oder Innenrandbereiche der zunächst in einem Vorfertigungszustand, insbesondere in Form einer Lochscheibe vorliegenden Dichtung unter einem vorwählbaren Winkel, z.B. in einer Richtung im wesentlichen rechtwinklig zur Dichtungsebene umgebördelt und sodann der (die) umgebördelte(n) Außen- und/oder Innenrandbereich(e) verdichtet wird (werden).

2. Verfahren nach Anspruch 1,
**dadurch gekennzeichnet,**
daß das Verdichten des (der) umgebördelten Außen- und/oder Innenrandbereichs (-bereiche) durch Anwendung von mechanischem Druck auf das Dichtungsmaterial erfolgt.

3. Verfahren nach Anspruch 2,
**dadurch gekennzeichnet,**
daß das Verdichten des (der) umgebördelten Außen- und/oder Innenrandbereichs (-bereiche) zusätzlich und gleichzeitig durch Anwendung von Wärme auf das Dichtungsmaterial erfolgt.

4. Verfahren nach einem der vorhergehenden Ansprüche,
**dadurch gekennzeichnet,**
daß der (die) umgebördelte(n) Außen- und/oder Innenrandbereich(e) auf ein Mehrfaches der Dichte des Materials der Gesamtdichtung verdichtet wird (werden).

5. Verfahren nach einem der vorhergehenden Ansprüche,
**dadurch gekennzeichnet,**
daß als Dichtungsmaterial für die Gesamtdichtung Polytetrafluorethylen (PTFE) verwendet wird.

6. Verfahren nach Anspruch 5,
**dadurch gekennzeichnet,**
daß als Dichtungsmaterial für die Gesamtdichtung multidirektional expandiertes Polytetrafluorethylen (ePTFE) verwendet wird.

7. Verfahren nach Anspruch 5 oder 6,
**dadurch gekennzeichnet,**
daß das PTFE bzw. ePTFE zuvor mit elektrisch leitfähigen Teilchen, vorzugsweise Graphit-Teilchen gefüllt wird, um die resultierende Dichtung elektrisch leitfähig zu machen.

8. Vorrichtung zur Herstellung einer Dichtung unter Verwendung eines verdichtbaren Dichtungsmaterials, insbesondere eines Fluorpolymers, zum Abdichten von Dichtflächen, vorzugsweise zusammenpassenden Dichtflächen, insbesondere Vorrichtung zum Herstellen einer Ringdichtung zum Abdichten von Flanschverbindungen für Rohre, wobei die Dichtung am Außen- und/oder Innenumfang mit einem Zentrierbund bzw. mit mehreren umfangsmäßig voneinander beabstandeten Zentrierbundabschnitten versehen wird, insbesondere Vorrichtung zur Durchführung des Verfahrens gemäß einem der Ansprüche 1 bis 7,
**dadurch gekennzeichnet,**
daß die Vorrichtung im wesentlichen aufweist:
a) eine Einrichtung (21) zum Tragen und Zentrieren der zunächst in einem Vorfertigungszustand, insbesondere in Form einer Lochscheibe, vorliegenden Dichtung;
b) eine Einrichtung (23) zum Umbördeln eines vorgegebenen Außen- und/oder Innenrandbereichs bzw. mehrerer vorgegebener, umfangsmäßig voneinander beabstandeter Außen- und/oder Innenrandbereiche der Dichtung und zum Verdichten des (der) umgebördelten Außen- und/oder Innenrandbereiches (-bereiche) unter Anwendung von mechanischem Druck und gegebenenfalls unter zusätzlicher und gleichzeitiger Anwendung von Wärme; und
c) eine Einrichtung zum Erzeugen von Relativbewegungen zwischen der Einrichtung (21) und der Einrichtung (23) für den Ablauf der aufeinanderfolgenden Vorgänge des Umbördelns und des Verdichtens zur Bildung des Zentrierbundes (3) bzw. der Zentrierbundabschnitte.

9. Vorrichtung nach Anspruch 8,
**dadurch gekennzeichnet,**
daß die Einrichtung (21) zum Tragen und Zentrieren der zunächst in einem Vorfertigungszustand vorliegenden Dichtung (1) im wesentlichen aus einem stempelförmig ausgebildeten Form- und Zentrierteil mit einem Sockelteil (39) und einem plattenartigen Tragteil (49) besteht, wobei das Form- und Zentrierteil (21) innerhalb einer Ausnehmung (40) eines Basisteils (22) der Vorrichtung (20) federnd abgestützt ist.

10. Vorrichtung nach Anspruch 9,
**dadurch gekennzeichnet,**
daß innerhalb der Ausnehmung (40) des Basisteils (22) eine Feder, vorzugsweise Tellerfeder (30) angeordnet ist, auf welcher das plattenförmige Tragteil (49) des Form- und Zentrierteils (21) abgestützt ist, während der Sockelteil (39) des Form- und Zentrierteils (21) innerhalb einer zentralen Bohrung (38) des Basisteils (22) beweglich geführt ist.

11. Vorrichtung nach einem der Ansprüche 9 oder 10,
**dadurch gekennzeichnet,**
daß das plattenförmige Tragteil (49) des Form- und Zentrierteils (21) eine tragende Fläche (48) zum Tragen und Zentrieren der Dichtung (1) aufweist, wobei oberhalb der Fläche (48) ein Zentrierdorn (34) vorgesehen ist, der innerhalb der Vorrichtung (20) relativ zu dem Form-und Zentrierteil (21) verschiebbar ist.

12. Vorrichtung nach Anspruch 11,
**dadurch gekennzeichnet,**
daß der Zentrierdorn (34) an seinem dem Form- und Zentrierteil (21) abgewendeten Ende an einem Oberteil (25) der Vorrichtung (20) starr befestigt ist, während der Zentrierdorn (34) im Inneren einen Hohlraum (34') aufweist, in welchem eine Ansatzschraube (32) angeordnet ist, die an ihrem dem Form- und Zentrierteil (21) zugewendeten Ende einen Niederhalter (26) trägt, der mit dem die Dichtung (1) tragenden Form- und Zentrierteil (21) zusammenwirkt.

13. Vorrichtung nach einem der Ansprüche 8 bis 12,
**dadurch gekennzeichnet,**
daß die Einrichtung (23) zum Umbördeln eines vorgegebenen Außen- und/oder Innenrandbereichs der Dichtung und zum Verdichten des umgebördelten Außen- und/oder Innenrandbereichs im wesentlichen aus vier gleichen, kreissektorförmig angeordneten und beweglich gelagerten Backen besteht, die in einem Bereich zwischen dem Basisteil (22) und dem Oberteil (25) der Vorrichtung (20) konzentrisch um den Zentrierdorn (34) herum angeordnet sind und auf ihren jeweiligen, dem Form- und Zentrierteil (21) zugewendeten Seiten eine für die Ausführung der aufeinanderfolgenden Vorgänge des Umbördelns und des Verdichtens erforderliche Oberflächengestaltung aufweisen.

14. Vorrichtung nach Anspruch 13,
**dadurch gekennzeichnet,**
daß die Backen (23) für den Vorgang des Umbördelns zunächst in Axialrichtung der Vorrichtung (20) nach abwärts und anschließend für den Vorgang des Verdichtens im wesentlichen in Radialrichtung der Vorrichtung (20) bewegbar sind.

15. Vorrichtung nach einem der Ansprüche 13 oder 14,
**dadurch gekennzeichnet,**
daß die am Oberteil (25) der Vorrichtung (20) im wesentlich radial bewegbar angebrachten Backen (23) gemeinsam mit dem am Oberteil (25) starr befestigten Zentrierdorn (34) in Axialrichtung der Vorrichtung (20) bewegbar sind.

16. Vorrichtung nach einem der Ansprüche 13 bis 15,
**dadurch gekennzeichnet,**
daß jeder Backen (23) auf seiner dem Form- und Zentrierteil (21) zugewendeten Seite, in Radialrichtung der Vorrichtung (20) von außen nach innen gesehen, eine konische Außenseite (41), eine sich daran anschließende, flache, ringförmig verlaufende Unterseite (35), eine sich daran anschließende, zylindrische Innenseite (42) und eine sich daran anschließende, ebene Auflageseite (37) aufweist.

17. Vorrichtung nach einem der Ansprüche 13 bis 16,
**dadurch gekennzeichnet,**
daß das Basisteil (22) der Vorrichtung (20) auf einer den Backen (23) zugewendeten Seite eine ringförmig verlaufende, konische Führungsfläche (43) aufweist, die zur Erzeugung einer im wesentlich radial gerichteten Bewegung der Backen (23) mit deren jeweiligen konischen Außenseiten (41) zusammenwirkt.

18. Vorrichtung nach einem der Ansprüche 13 bis 17,
**dadurch gekennzeichnet,**
daß jeder Backen (23) auf seiner dem Form- und Zentrierteil (21) abgewendeten Seite mittels einer ersten Druckfeder (33) mit dem Oberteil (25) der Vorrichtung (20) verbunden ist.

19. Vorrichtung nach einem der Ansprüche 11 bis 18,
**dadurch gekennzeichnet,**
daß der Zentrierdorn (34) in einem dem Niederhalter (26) zugewendeten Bereich auf einer zweiten Druckfeder (31) abgestützt ist, die innerhalb einer hohlzylindrischen Aussparung des Zentrierdornes (34) angeordnet ist und die Ansatzschraube (32) umgibt.

20. Dichtung zum Abdichten von Dichtflächen, vorzugsweise zusammenpassenden Dichtflächen, insbesondere Ringdichtung zum Abdichten von Flanschverbindungen für Rohre,
**dadurch gekennzeichnet,**
daß sie nach dem Verfahren gemäß einem der Ansprüche 1 bis 7 hergestellt ist.
